(19) **Europäisches Patentamt / European Patent Office / Office européen des brevets**

(11) **EP 4 208 949 B1**

(12) **EUROPEAN PATENT SPECIFICATION**

(45) Date of publication and mention
of the grant of the patent:
**25.06.2025 Bulletin 2025/26**

(21) Application number: **20824208.1**

(22) Date of filing: **10.12.2020**

(51) International Patent Classification (IPC):
**H04B 1/40** *(2015.01)*      **H04B 1/525** *(2015.01)*

(52) Cooperative Patent Classification (CPC):
**H04B 1/40; H04B 1/525**

(86) International application number:
**PCT/EP2020/085491**

(87) International publication number:
**WO 2022/122155 (16.06.2022 Gazette 2022/24)**

(54) **FULL-DUPLEX TRANSCEIVER AND METHOD FOR OPERATING THE SAME**

VOLLDUPLEX-SENDE-EMPFÄNGER UND VERFAHREN ZUM BETRIEB DAVON

ÉMETTEUR-RÉCEPTEUR FD FULL-DUPLEX ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietor: **Huawei Technologies Co., Ltd.**
**Shenzhen, Guangdong 518129 (CN)**

(72) Inventors:
• **DUARTE GELVEZ, Melissa**
  **80992 Munich (DE)**
• **FERRAND, Paul**
  **80992 Munich (DE)**
• **GUILLAUD, Maxime**
  **80992 Munich (DE)**
• **YANG, Ganghua**
  **80992 Munich (DE)**
• **GARCIA ORDONEZ, Luis**
  **80992 Munich (DE)**

(74) Representative: **Gill Jennings & Every LLP**
**The Broadgate Tower**
**20 Primrose Street**
**London EC2A 2ES (GB)**

(56) References cited:
**WO-A1-2018/153439      US-A1- 2014 198 688**
**US-A1- 2020 295 912**

## Description

### TECHNICAL FIELD

The present disclosure relates generally to the field of signal processing, and particularly to a Full-Duplex (FD) transceiver that is configured to cope with the problem of Signal-of-Interest (SoI) degradation due to the presence of a Self-Interference (SI), as well as to a method for operating the FD transceiver.

### BACKGROUND

A FD transceiver utilizes the same time-frequency resource units for signal transmission (TX) and signal reception (RX). In the context of data communication (either wireless or wire-based), the FD transceiver is capable of achieving higher spectral efficiency than a Half-Duplex (HD) transceiver due to HD orthogonal use of resources for the TX and RX, as is the case for Time Division Duplex (TDD) or Frequency Division Duplex (FDD). In the context of radar technology, the FD transceiver may be used as a continuous wave radar, which is an alternative to a pulse wave radar. Furthermore, FD transceivers may also be used for joint wireless data communication and sensing, and this joint functionality is of increasing interest as frequency resources become scarcer and more sensing capabilities are required for next-generation applications of wireless devices.

At the same time, the main bottleneck for the implementation of FD transceivers is a quantization noise due to a SI. Given that the TX and RX are performed simultaneously, the FD transceiver is interfered by its own transmitted signal which propagates to a receiver of the FD transceiver via a SI channel. Consequently, a signal received at the FD transceiver has an undesired component due to the SI plus a desired component, i.e. the SoI.

The existing solutions for the problem of SoI degradation due to the presence of the SI may be classified in the following three categories: TX and RX path isolation, analog SI cancellation, and digital SI cancellation. All these categories of the existing solutions are aimed at mitigating or cancelling the SI such that a SI power at the receiver of the FD transceiver is reduced. However, the TX and RX path isolation, the analog SI cancellation, and the digital SI cancellation, as used individually or in any combination, do not efficiently deal with the SoI degradation caused by the presence of the SI.

US 2014/198688 A1 describes a method, apparatus, and computer program product to reduce self-interference in a transceiver. In the context of a method, a self-interference channel estimate may be determined. A reconstructed interference may further be determined based at least in part on the self-interference channel estimate and a signal to be transmitted and the reconstructed self-interference is caused to be subtracted from a received signal.

US 2020/295912 A1 describes a method for digital self-interference cancelation, including receiving inputs, transforming the inputs, generating outputs based on the transformed inputs, transforming the outputs, and/or generating a cancellation signal based on the outputs.

WO 2018/153439 A1 describes an in-band Full-Duplex (FD) transceiver and a corresponding method. The FD transceiver comprises a transmitter and a receiver. It further comprises. The FD transceiver also comprises a converter configured to digitalize at least two analog reference signals and an analog receive signal of the receiver, and a digital canceller configured to generate a cancellation signal based on the at least two digitalized analog reference signals.

### SUMMARY

The present invention is defined by the features disclosed in the independent claims. Additional embodiments are defined in the dependent claims. This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a FD transceiver architecture that enables efficient SI cancellation in a received signal comprising a SoI and a SI.

The objective is achieved by the features of the independent claims in the appended claims. Further embodiments and examples are apparent from the dependent claims, the detailed description, and the accompanying drawings.

According to a first aspect, a FD transceiver is provided. The FD transceiver comprises an analog front-end, a variable gain amplifier, a modulo-based Analog-to-Digital Converter (ADC), and a digital canceller. The analog front-end is configured to receive an analog signal comprising a SoI and a SI. The variable gain amplifier is configured to amplify the analog signal based on a gain parameter. The modulo-based ADC is configured to generate a digital signal based on the amplified analog signal. As a result of a modulo-based analog-to-digital conversion operation, the digital signal is a folded and quantized representation of the amplified analog signal. The digital canceller is configured to estimate the SI in the digital signal based on one or more reference signals, and to obtain a digital representation of the SoI based on the digital signal and the estimated SI. An advantage of the FD transceiver according to the first aspect comes from the fact that the modulo-based ADC used in the FD transceiver according to the first aspect does not suffer from a saturation problem inherent in conventional ADCs, since the received (FD) analog signal is folded via a modulo operation before quantization to match an input range of a quantizer used in the modulo-based ADC. Consequently, the variable gain parameter may be set such that quantization levels of the quantizer are better adapted to the Sol instead of being adapted to the received analog signal (including the SI). Furthermore, the SI estimation and cancellation may be fully performed in a digital domain, whereupon the state-of-the-art analog SI cancellation and/or isolation techniques are not required, thereby avoiding their drawbacks and limitations. In fact, under ideal operating conditions, i.e. when the SI may be perfectly estimated, the FD transceiver according to the first aspect incurs almost no Sol degradation due to the presence of the SI.

In one embodiment of the first aspect, the modulo-based ADC is configured to generate the digital signal by transforming the amplified analog signal into a phase-domain signal which is folded every $2\pi$ radians, and by quantizing the phase-domain signal. By so doing, it is possible to implement the modulo-based analog-to-digital conversion operation on the received analog signal, which results in its folded and quantized representation (i.e. the digital signal).

In another embodiment of the first aspect, the modulo-based ADC is configured to generate the digital signal by applying an incremental fold counter to the amplified analog signal. By so doing, it is possible to implement the modulo-based analog-to-digital conversion operation on the received analog signal, which results in its folded and quantized representation (i.e. the digital signal).

In another embodiment of the first aspect, the modulo-based ADC comprises one or more voltage-controlled oscillator-based ADCs (e.g., ring oscillator-based ADCs). By using the voltage-controlled oscillator-based ADCs, it is possible to implement the modulo-based analog-to-digital conversion operation on the received analog signal, which results in its folded and quantized representation (i.e. the digital signal).

In one embodiment of the first aspect, the one or more reference signals comprise one or more analog and/or digital signals sent from the analog front-end. By using such reference signals, it is possible to increase the efficiency of the SI estimation.

In one embodiment of the first aspect, the FD transceiver further comprises a memory configured to store the one or more reference signals. By using this memory, it is possible to select (with greater efficiency) which of the reference signals previously sent from the analog front-end are to be used for the SI estimation.

In one embodiment of the first aspect, the memory storing the reference signals is configured as a First-In First-Out (FIFO) buffer (e.g., a FIFO circular buffer). By storing the reference signals on a FIFO basis, it is possible to provide their easy and convenient manipulation in future, i.e. when estimating the SI.

In one embodiment of the first aspect, the digital canceller is configured to apply an adaptive filter to estimate the SI in the digital signal based on the one or more reference signals. By using the adaptive filter, it is possible to estimate the SI in the digital signal more efficiently.

In one embodiment of the first aspect, the adaptive filter applied by the digital canceller is based on one of a least-mean-square (LMS) algorithm, a normalized LMS algorithm, a leaky LMS algorithm, and a recursive least square algorithm. This may make the FD transceiver according to the first aspect more flexible in use.

In another embodiment of the first aspect, the digital canceller is further configured to apply a machine-learning algorithm to estimate the SI in the digital signal based on the one or more reference signals. By using the machine-learning algorithm, it is possible to estimate the SI in the digital signal more efficiently.

In one embodiment of the first aspect, the FD transceiver further comprises a gain control unit configured to tune the gain parameter of the variable gain amplifier based on at least one of the estimated SI, the digital representation of the Sol, and the one or more reference signals. By so doing, it is possible to provide dynamic adaptation of the gain parameter of the variable gain amplifier, thereby resulting in the proper amplification of received analog signals.

According to a second aspect, a method for operating a FD transceiver is provided. The method starts with the step of receiving an analog signal. The analog signal comprises a Sol and a SI. Then, the method proceeds to the step of amplifying the analog signal based on a gain parameter. After that, the method goes on to the step of generating a digital signal based on the amplified analog signal. The digital signal is obtained by performing a modulo-based analog-to-digital conversion operation on the amplified analog signal, for which reason the digital signal is represented by a folded and quantized representation of the amplified analog signal. The method further proceeds to the steps of estimating the SI in the digital signal based on one or more reference signals and obtaining a digital representation of the Sol based on the digital signal and the estimated SI. By so doing, it is possible to provide efficient SI estimation and cancellation. Moreover, since the SI estimation and cancellation are performed in the digital domain, the state-of-the-art analog SI cancellation and/or isolation techniques are not required, thereby avoiding their drawbacks and limitations. In fact, under ideal operating conditions, i.e. when the SI may be perfectly estimated, it is possible to avoid Sol degradation due to the presence of the SI.

In one embodiment of the second aspect, the step of generating the digital signal comprises transforming the amplified analog signal into a phase-domain signal that is folded every $2\pi$ radians, and generating the digital signal by quantizing the phase-domain signal. By so doing, it is possible to implement the modulo-based analog-to-digital conversion operation on the received analog signal, which results in its folded and quantized representation (i.e. the digital signal).

In another embodiment of the second aspect, the step of generating the digital signal comprises generating the digital signal by applying an incremental fold counter to the amplified analog signal. By so doing, it is possible to implement the modulo-based analog-to-digital conversion operation on the received analog signal, which results in its folded and quantized representation (i.e. the digital signal).

In another embodiment of the second aspect, the step of generating the digital signal comprises generating the digital signal by using one or more voltage-controlled oscillators. By so doing, it is possible to implement the modulo-based analog-to-digital conversion operation on the received analog signal, which results in its folded and quantized representation (i.e. the digital signal).

In one embodiment of the second aspect, the one or more reference signals comprise one or more analog and/or digital signals sent from the FD transceiver. By using such reference signals, it is possible to increase the efficiency of the SI estimation.

In one embodiment of the second aspect, the step of estimating the SI in the digital signal is performed by using an adaptive filter. By using the adaptive filter, it is possible to estimate the SI in the digital signal more efficiently.

In one embodiment of the second aspect, the adaptive filter is based on one of a least-mean-square (LMS) algorithm, a normalized LMS algorithm, a leaky LMS algorithm, and a recursive least square algorithm. This may make the method according to the second aspect more flexible in use.

In another embodiment of the second aspect, the step of estimating the SI in the digital signal is performed by using a machine-learning algorithm. By using the machine-learning algorithm, it is possible to estimate the SI in the digital signal more efficiently.

In one embodiment of the second aspect, the method further comprises the step of tuning the gain parameter based on at least one of the estimated SI, the digital representation of the SoI, and the one or more reference signals. By so doing, it is possible to provide dynamic adaptation of the gain parameter of the variable gain amplifier, thereby resulting in the proper amplification of received analog signals.

According to a third aspect, a computer program product is provided. The computer program product comprises a computer-readable storage medium storing a computer code which, when executed by a processor of a FD transceiver, causes the FD transceiver to perform the method according to the second aspect. By using such a computer program product, it is possible to simplify the implementation of the method according to the second aspect in any FD transceiver, like the FD transceiver according to the first aspect.

Other features and advantages of the present disclosure will be apparent upon reading the following detailed description and reviewing the accompanying drawings.

## BRIEF DESCRIPTION OF THE DRAWINGS

The present disclosure is explained below with reference to the accompanying drawings, in which:

FIG. 1 shows a block diagram of a conventional FD transceiver 100 for concurrently transmitting and receiving data via analog signals over the same time-frequency resources;

FIG. 2 shows a block diagram of the FD transceiver shown in FIG. 1, in which a DSP unit is implemented as a combination of a TX and RX DSP subunit and a digital canceller;

FIG. 3 shows a graphical description of a quantization noise due to a SI;

FIG. 4 shows a Signal to Quantization Noise Ratio (SQNR) as a function of the inverse of a Signal to Interference Ratio (SIR);

FIG. 5 shows a block diagram of a FD transceiver in accordance with one exemplary embodiment;

FIG. 6 shows an exemplary transfer function of a modulo-operation performed in a modulo-based ADC included in the FD transceiver shown in FIG. 5;

FIG. 7 shows the SQNR as a function of 1/SIR, as obtained when assuming that the SI is perfectly estimated in the FD transceiver shown in FIG. 5;

FIG. 8 shows a flowchart of a method for operating the FD transceiver shown in FIG. 5 in accordance with one exemplary embodiment;

FIG. 9 shows how a digital canceller may be implemented in the FD transceiver shown in FIG. 5 in accordance with one exemplary embodiment;

FIG. 10 shows how the digital canceller may be implemented in the FD transceiver shown in FIG. 5 in accordance with another exemplary embodiment;

FIG. 11 shows how the digital canceller may be implemented in the FD transceiver shown in FIG. 5 in accordance with another exemplary embodiment;

FIG. 12 shows the improved performance of the FD transceiver shown in FIG. 5 upon tuning a gain parameter of a variable gain amplifier; and

FIG. 13 shows how the state-of-the-art analog SI cancellation may be implemented in the FD transceiver shown in FIG. 5.

## DETAILED DESCRIPTION

Various embodiments of the present disclosure are further described in more detail with reference to the accompanying drawings. However, the present disclosure may be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein may be implemented in practice by using any numbers of the embodiments provided herein. Furthermore, it should be understood that any embodiment of the present disclosure may be implemented using one or more of the features presented in the appended claims.

The word "exemplary" is used herein in the meaning of "used as an illustration". Unless otherwise stated, any embodiment described herein as "exemplary" should not be construed as preferable or having an advantage over other embodiments.

According to the embodiments disclosed herein, a Full-Duplex (FD) transceiver refers to a transceiver that utilizes the same time-frequency resources for signal transmission (TX) and reception (RX). It should be noted that the signal TX and RX may be performed concurrently via either wireless or wire-based communications, for which reason each mention of analog signals transmitted and received at the FD transceiver should be construed herein as relating to the analog signals transmitted and received via any suitable wireless or wire-based communications. The FD transceiver may be implemented as an individual communication device or as part of a user equipment (UE). The UE may refer to a mobile device, a mobile station, a mobile terminal, a subscriber unit, a mobile phone, a cellular phone, a smart phone, a cordless phone, a personal digital assistant (PDA), a wireless communication device, a desktop computer, a laptop computer, a tablet computer, a gaming device (e.g., a gaming console, a gaming controller, etc.), a netbook, a smartbook, an ultrabook, a medical device or medical equipment, a biometric sensor, a wearable device (e.g., a smart watch, smart glasses, a smart wrist band, etc.), an entertainment device (e.g., an audio player, a video player, etc.), a vehicular component or sensor, a smart meter/sensor, an unmanned vehicle (e.g., an industrial robot, a quadcopter, etc.), industrial manufacturing equipment, a global positioning system (GPS) device, an Internet-of-Things (IoT) device, a machine-type communication (MTC) device, a group of Massive IoT (MIoT) or Massive MTC (mMTC) devices/sensors, or any other suitable device configured to support wireless or wire communications. In some embodiments, the UE may refer to at least two collocated and inter-connected UEs thus defined.

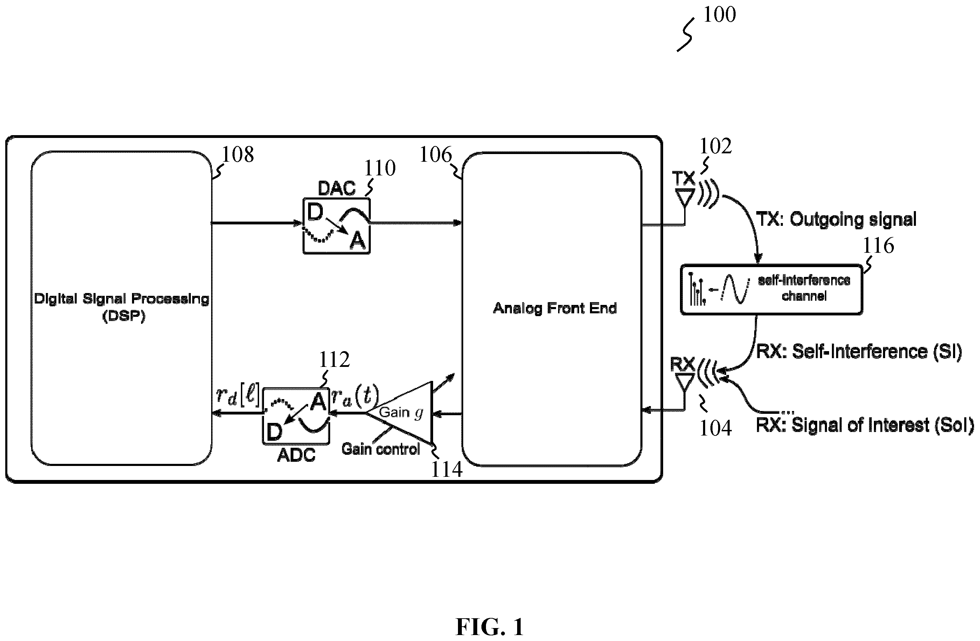

FIG. 1 shows a block diagram of a conventional FD transceiver 100 for concurrently transmitting and receiving data via analog signals over the same time-frequency resources. To perform the concurrent signal TX and RX, the FD transceiver 100 comprises a transmitting antenna 102 and a receiving antenna 104. The FD transceiver 100 further comprises an analog front-end 106 for different analog signal processing, a Digital Signal Processing (DSP) unit 108 for different digital signal processing, a Digital-to-Analog Converter (DAC) 110 and an Analog-to-Digital Converter (ADC) 112 which are both arranged between the analog front-end 106 and the DSP unit 108, and a variable gain amplifier 114 which applies a certain gain parameter to received analog signals. The gain parameter is selected such that it adapts a power of a received analog signal to a dynamic range of the ADC 112.

The main bottleneck for the implementation of the FD transceiver 100 is a quantization noise that occurs due to a Self-Interference (SI). Due to the concurrent signal TX and RX, the FD transceiver 100 is interfered by its own transmitted signal which goes out of the transmitting antenna 102 and propagates to the receiving antenna 104 via a SI channel 116. Consequently, the analog signal received at the receiving antenna 104 of the FD transceiver 100 has an undesired component due to the SI plus a desired component that is called a Signal of Interest (SoI) coming from a remote transmitter.

Let us use $z_a(t)$ and $x_a(t)$ to denote the SI and SoI, respectively, at the input of the variable gain amplifier 114, and $g$ to denote the gain parameter of the variable gain amplifier 114. Thus, at the input of the ADC 112, the contribution of the SI is given by $gz_a(t)$ with power $g^2 P_{SI}$ and the contribution of the SoI is given by $gx_a(t)$ with power $g^2 P_{SoI}$. Since these SI and SoI are dominant signals at the receiving antenna 104 (e.g., they are stronger than a thermal noise), then an approximation of the received analog signal at the input of the ADC 112 is given by

$$r_a(t) = g(z_a(t) + x_a(t)).$$

In practice, $P_{SI}$ is larger than $P_{SoI}$ because the distance traveled by the SI is shorter than the distance traveled by the SoI. The ADC 112 applies a sampling operation (i.e. continuous-to-discrete time conversion) and a quantization operation (i.e. continuous-to-digital voltage level conversion), and the output of the ADC 112 is as follows:

$$r_d[\ell] = Q_b\big(g(z_a(\ell T_s) + x_a(\ell T_s))\big),$$

where $\ell$ denotes the $\ell$-th sample, $Q_b()$ is the quantization function with a resolution of $b$ bits, and $T_s$ is the sampling period or inverse of a sampling frequency $f_s$, i.e. $T_s = 1/f_s$. It should be noted that the sampling operation is inherent in all ADCs, and each ADC which will be further mentioned herein should be construed as performing the sampling operation even if there is no explicit indication thereto.

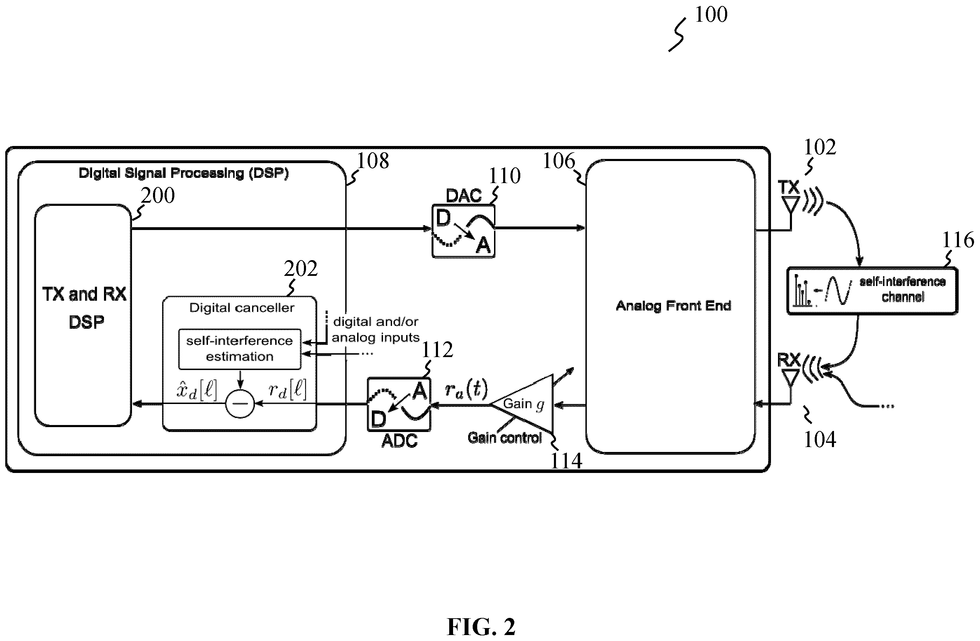

FIG. 2 shows a block diagram of the FD transceiver 100, in which the DSP unit 108 is implemented as a combination of a TX and RX DSP subunit 200 and a digital canceller 202. The TX and RX DSP subunit 200 is responsible for different digital signal processing, while the digital canceller 202 is configured to perform digital SI estimation and cancellation based on different digital and/or analog input references. Given such arrangement of the digital canceller 202, and assuming that the digital canceller 202 has perfect knowledge of the quantized SI given by $Q_b(gz_a(\ell T_s))$, then, after the perfect digital cancellation of the SI, one can obtain the following digital representation or estimate of the SoI:

$$\hat{x}_d[\ell] = Q_b\big(g(z_a(\ell T_s) + x_a(\ell T_s))\big) - Q_b(gz_a(\ell T_s))$$

and the quantization noise $n_Q[\ell]$ for the SoI, i.e. the noise or error in representing $gx_a(\ell T_s)$ by using $\hat{x}_d[\ell]$, given by

$$n_Q[\ell] = \hat{x}_d[\ell] - gx_a(\ell T_s) =$$
$$= Q_b\big(g(z_a(\ell T_s) + x_a(\ell T_s))\big) - Q_b\big(gz_a(\ell T_s)\big) - gx_a(\ell T_s) \approx$$
$$\approx Q_b\big(gx_a(\ell T_s)\big) - gx_a(\ell T_s).$$

The quantization noise $n_Q[\ell]$ is a function of the gain parameter $g$ and the quantization function $Q_b()$ which are fixed before the digital SI cancellation. Since $g$ is set as function of $z_a(t) + x_a(t)$ such that $g(z_a(t) + x_a(t))$ would ideally span all the quantization levels of the ADC 112 (while avoiding saturation) and since the amplitude of $z_a(t)$ is larger than the amplitude of $x_a(t)$, then, as a result, $gz_a(t)$ spans most of the quantization levels of the ADC 112, while leaving few levels of quantization for $gx_a(t)$. In summary, the small amplitude of $gx_a(t)$ results in $gx_a(t)$ spanning few levels of quantization of the ADC 112, and this leads to the large quantization noise $n_Q[\ell]$ for the SoI due to the SI. Thus, the quantization noise $n_Q[\ell]$ cannot be removed even after the perfect digital SI cancellation.

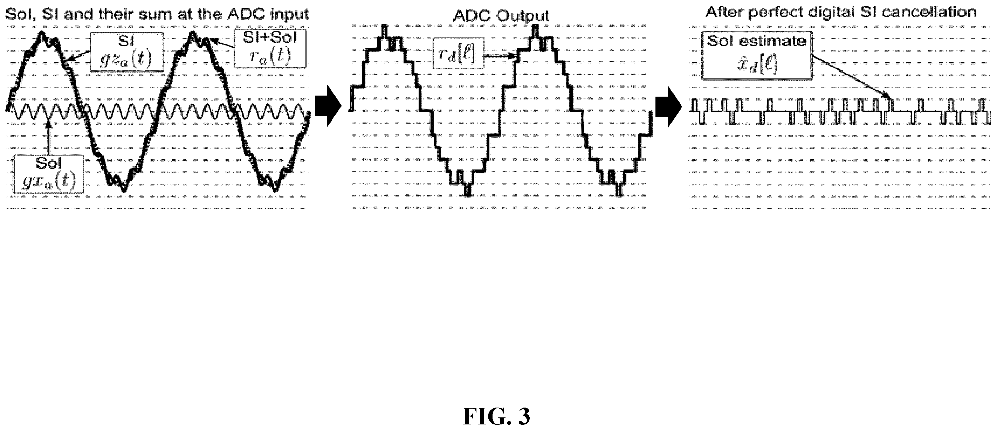

FIG. 3 shows a graphical description of the quantization noise $n_Q[\ell]$ due to the SI. For the sake of simplicity, the SI and SoI are shown with different frequencies, but they may be of the same frequency in the FD transceiver 100. At first, the amplified SI and SoI, i.e. $gz_a(t)$ and $gx_a(t)$, respectively, are fed as their sum, i.e. $r_a(t)$, to the input of the ADC 112 (see FIG. 3: the picture on the left). The ADC 112 then converts $r_a(t)$ to $r_d[\ell]$, as defined above (see FIG. 3: the picture in the middle). The digital canceller 202 is assumed to perform the perfect digital SI estimation and cancellation, and outputs the digital estimate $\hat{x}_d[\ell]$ of the SoI (see FIG. 3: the picture on the right). Note that, even after the perfect digital SI cancellation, the resulting signal $\hat{x}_d[\ell]$ represents a poorly quantized version of the SoI, i.e. $gx_a(\ell T_s)$. Consequently, the quality of the SoI after the ADC 112 is degraded due to the quantization noise $n_Q[\ell]$ caused by the presence of the SI in the received analog signal.

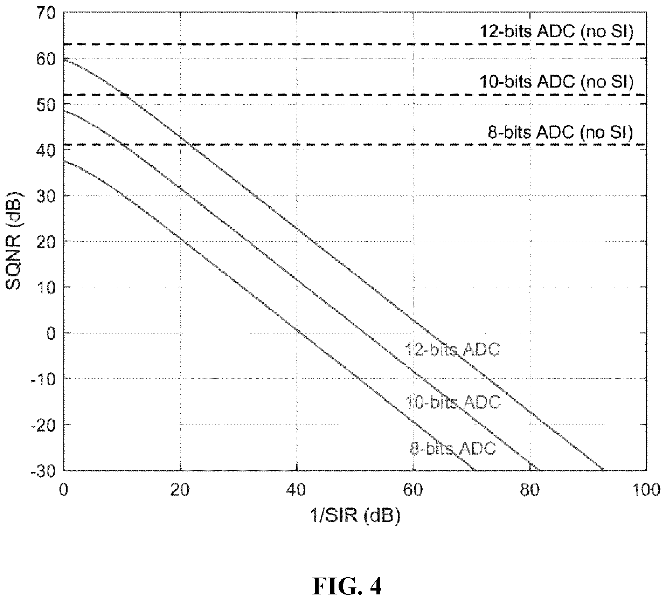

FIG. 4 shows a Signal to Quantization Noise Ratio (SQNR) as function of the inverse of a Signal to Interference Ratio (SIR). The results in FIG. 4 have been obtained assuming the perfect digital SI cancellation, and the shown SQNR is the one observed at the output of the digital canceller 202 of the FD transceiver 100. More specifically, the SQNR is given by

$$\text{SQNR} = g^2 P_{SoI}/P_Q,$$

where $P_Q$ is the power of the quantization noise $n_Q[\ell]$. In turn, the SIR is given by

$$\text{SIR} = P_{SoI}/P_{SI}.$$

The dashed lines in FIG. 4 show the benchmark performance without the SI, i.e. where $z_a(t) = 0$ and $g$ is based solely on $x_a(t)$, whereupon $g$ adapts $x_a(t)$ to the input range of the ADC 112. The solid lines in FIG. 4 show the performance with the SI. Hence, $g$ adapts $z_a(t) + x_a(t)$ to the input range of the ADC 112. The solid lines are shown as a function of increasing 1/SIR (i.e. the power of $z_a(t)$ increases with respect to the power of $x_a(t)$). Note that the SQNR decreases as 1/SIR increases. Hence, the larger SI leads to larger performance degradation in terms of the observed SQNR. This degradation in the SQNR, observed for all SIR values considered, is the main bottleneck in the implementation of FD transceivers.

In an attempt to solve the problem of the SQNR degradation (or, in other words, the SoI degradation) due to the presence of the SI, it has been previously proposed to use the following techniques: TX and RX path solation, or analog SI cancellation. These techniques are both aimed at mitigating or cancelling the SI such that the power of the SI is reduced respectively at the receiving antenna 104 or the variable gain amplifier 114 within the FD transceiver 100.

By isolating TX and RX paths from each other, it is possible to reduce the received power of the SI, thereby resulting in a reduction of the quantization noise $n_Q[\ell]$ that is due to the SI. However, two main issues caused by using such isolation are as follows: (1) a separate antenna architecture required for the isolation may not be feasible due to form-factor constraints of the FD transceiver 100; and (2) the isolation is not effective in a multipath environment because the quantization noise due to the SI may not be reduced when the received SI has components that are due to reflections from surrounding objects.

The analog SI cancellation consists in subtracting, in an analog domain, an estimate of the SI signal from the received analog signal. Let us use $z_a^{RF}(t)$ to denote the received SI in the analog RF domain and $\hat{z}_a^{RF}(t)$ to denote the estimate of $z_a^{RF}(t)$. The received analog signal is composed of the sum of the SoI $x_a^{RF}(t)$ and the SI. Hence, the received analog signal after the analog SI cancellation is equal to

$$r_a^{RF}(t) = x_a^{RF}(t) + z_a^{RF}(t) - \hat{z}_a^{RF}(t).$$

The main advantage of the analog SI cancellation is that the power of the SI is reduced before the variable gain amplifier 114, and this reduces the quantization noise $n_Q[\ell]$ due to the SI. However, two main issues peculiar to the analog SI cancellation solutions are as follows: (1) required analog processing may involve bulky or expensive components like analog delay lines, analog vector modulators and DACs; and (2) analog hardware constraints result in a limited amount of SI cancellation (~40dB). Consequently, the reduction in the quantization noise $n_Q[\ell]$ due to the SI is also limited.

The digital SI cancellation (e.g., applied after the ADC 112) is implemented by computing an estimate of the SI based on an analog or digital input reference and subtracting the estimate of the SI from the received analog signal. Digital cancellers are typically built as adaptive filters, which are well-known in the art. The goal of a digital canceller is to reduce the SI to a noise floor. The state-of-the-art digital cancellers may virtually remove all SI up to the noise floor, as long as the digital or analog input reference is free of noise, and if the received analog signal is only corrupted by white noise. If a quantization noise or non-linear effects are added to the received analog signal, the digital cancellers may lose performance.

Finally, the above-described three techniques for SI mitigation or cancellation may also be combined. However, even this combination does not efficiently solve the problem of the quantization noise due to the SI.

The exemplary embodiments disclosed herein provide a technical solution that allows mitigating or even eliminating the above-sounded drawbacks peculiar to the prior art. In particular, the technical solution disclosed herein addresses the problem of the quantization noise in FD operation by using, instead of a conventional ADC (like the ADC 112 in FIGs. 1 and 2), a modulo-based ADC in a FD transceiver architecture. The modulo-based ADC applies a modulo operation, before quantization, in order to fold a received and amplified analog signal such that the analog signal perfectly matches a quantizer input range. Thus, a digital signal obtained by the modulo-based ADC is a folded and quantized representation of the analog signal. The digital signal is then fed to a digital canceller that is configured to estimate the SI in the digital signal by using one or more reference signals and obtain a digital representation of the SoI based on the digital signal and the estimated SI. By so doing, it is possible to provide efficient SI estimation and cancellation. Moreover, since the SI estimation and cancellation are performed in the digital domain, the state-of-the-art analog SI cancellation and/or isolation techniques are not required, thus avoiding their drawbacks and limitations. In fact, under ideal operating conditions, i.e. when the SI may be perfectly estimated, it is possible to avoid SoI degradation due to the quantization noise caused by the presence of the SI in the received analog signal.

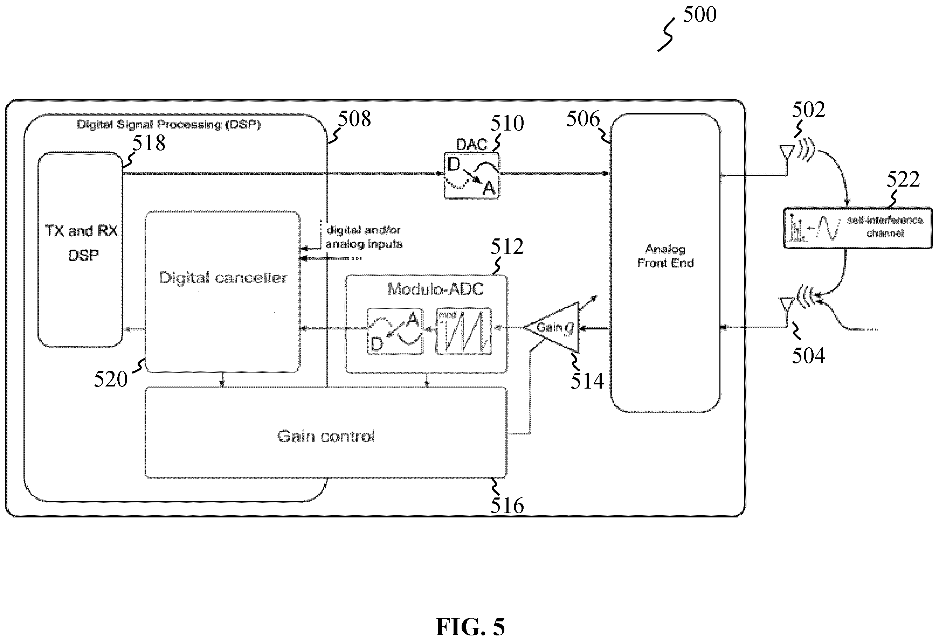

FIG. 5 shows a block diagram of a FD transceiver 500 in accordance with one exemplary embodiment. The FD transceiver 500 comprises the following constructive elements: a transmitting antenna 502, a receiving antenna 504, an analog front-end 506, a DSP unit 508, a DAC 510, a modulo-based ADC 512, a variable gain amplifier 514, and a gain control unit 516. As also shown in FIG. 5, the DSP unit 508 comprises a TX and RX DSP subunit 518 and a digital canceller 520. It should be noted that the number, arrangement and interconnection of the constructive elements constituting the FD transceiver 500, which are shown in FIG. 5, are not intended to be any limitation of the present disclosure, but merely used to provide a general idea of how the constructive elements may be implemented within the FD transceiver 500. For example, the gain control unit 516 may be implemented as an individual constructive element of the FD transceiver 500 or as part of either the DSP unit 508 or the variable gain amplifier 514. Furthermore, since the present disclosure is aimed at addressing the problem of the quantization noise due to the SI propagating via a SI channel 522 between the transmitting and receiving antennas 502 and 504, further discussion will focus on those constructive elements of the FD transceiver 500 which are involved in the SI estimation and cancellation. Looking ahead, we note that those constructive elements are represented by the analog front-end 506, the modulo-based ADC 512, the variable gain amplifier 514, the gain control unit 516, and the digital canceller 520.

The analog front-end 506 may be configured as one or more analog signal conditioning circuits (e.g., based on operational amplifiers, signal filters, signal splitters, etc.) intended for different analog signal processing. The modulo-based ADC 512 and the variable gain amplifier 514 may be implemented based on any suitable semiconductor technology, such, for example, as Complementary Metal-Oxide-Semiconductor (CMOS), Bipolar CMOS technology, etc.

The digital canceller 520 may be implemented by using a CPU, general-purpose processor, single-purpose processor, microcontroller, microprocessor, application specific integrated circuit (ASIC), field programmable gate array (FPGA), digital signal processor (DSP), complex programmable logic device, etc. In some embodiments, the digital canceller 520 may be implemented as any combination of the aforesaid, e.g., as two or more microprocessors.

Let us now say a few words about modulo-based ADCs. The basic idea behind the modulo-based ADCs is to apply a modulo operation to an original analog signal such that the resulting folded signal perfectly matches the quantizer input range. Then, the original analog signal is reconstructed in the digital domain from modulo-reduced quantized samples by relying either on: (a) some correlation assumptions on the analog signal, or (b) some oversampling in a time domain or, in the case of multichannel analog-to-digital conversion, some increased dimensionality generated by creating multiple linear combinations of the analog signals and jointly using, for reconstruction, the outputs of multiple modulo-ADCs.

However, in terms of the FD operation, we are not interested in reconstructing the original analog signal, which in case of FD contains the SoI and the SI. Actually, analog-to-digital conversion in the FD operation differs from the conventional case by the fact that a part of the signal to be converted, i.e. the SI, is not (directly) required and is partially known. Given this particularity of the FD operation, the modulo-based ADC 512 is used in the FD transceiver 500 along with an appropriate reconstruction procedure described below.

Similar to the aforesaid for FIGs. 1-3, let us use $z_a(t)$ and $x_a(t)$ to denote respectively the SI and the SoI at the input of the variable gain amplifier 514. Thus, at the input of the modulo-based ADC 512, the contribution of the SI is given by $gz_a(t)$ with power $g^2P_{SI}$ and the contribution of the SoI is given by $gx_a(t)$ with power $g^2P_{SoI}$. Since these are dominant signals at the RX chain of the FD transceiver 500 (e.g. stronger than a thermal noise), then an approximation of the amplified analog signal at the input of the modulo-based ADC 512 is given by

$$r_a(t) = g(z_a(t) + x_a(t)).$$

Let us, for example, assume that the modulo-based ADC 512 uses:

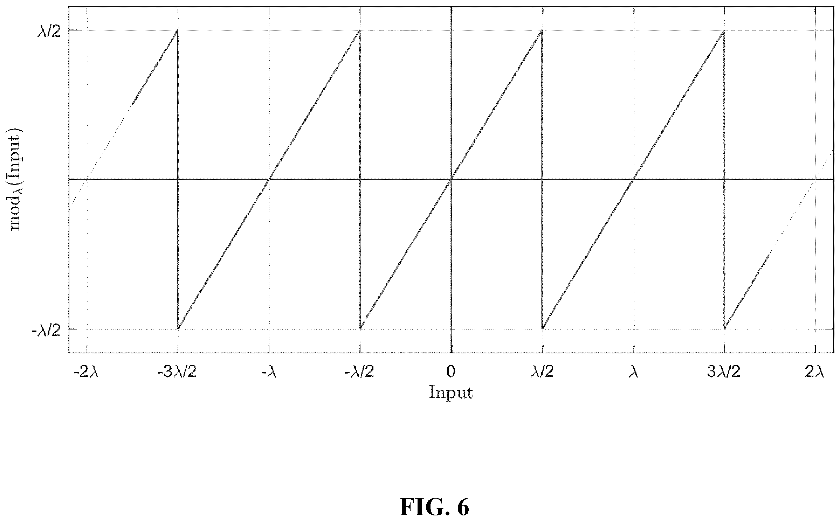

- a modulo-$\lambda$ operation (whose transfer function is illustrated in FIG. 6) defined as

$$\mathrm{mod}_\lambda(x) = x - \lambda(1 + [x/\lambda - 1/2]),$$

where $\lfloor \cdot \rfloor$ denotes the floor function; and
- a mid-rise uniform quantizer with a resolution of *b* bits, an input range [-$\lambda$/2,$\lambda$/2], and a quantization step-size $\mu = 2^{-b}\lambda$, so that the quantization function that is applied by the ADC operation is given by

$$Q_b(x) = \begin{cases} -\mu(2^b - 1)/2 & x \le -\lambda/2 \\ \mu([x/\mu] + 1/2) & -\lambda/2 < x < \lambda/2 \\ \mu(2^b - 1)/2 & x \ge \lambda/2 \end{cases}.$$

It is worth noting that this is a conventional ADC which suffers from saturation effects whenever the input analog signal exceeds the input range $[-\lambda/2, \lambda/2]$.

Given the assumptions above, the output of the modulo-based ADC 512 can be written as

$$r_d[\ell] = Q_b\left(\mathrm{mod}_\lambda\left(r_a(\ell T_s)\right)\right) = Q_b\left(\mathrm{mod}_\lambda\left(g\left(z_a(\ell T_s) + x_a(\ell T_s)\right)\right)\right) = \mathrm{mod}_\lambda\left(g(z_d[\ell] + x_d[\ell]) + n_Q[\ell]\right)$$

where $z_d[\ell] = z_a(\ell T_s), x_d[\ell] = x_a(\ell T_s)$ , and

$$n_Q[\ell] = \mathrm{mod}_\mu\left(\mathrm{mod}_\lambda\left(g(z_d[\ell] + x_d[\ell])\right) - Q_b\left(\mathrm{mod}_\lambda\left(g(z_a(\ell T_s) + x_a(\ell T_s))\right)\right)\right)$$

denotes the quantization noise, which is approximately uniformly distributed in $[-\mu/2, \mu/2]$.

Let us further assume that the digital canceller 520 has perfect knowledge of the SI, i.e. $z_d[\ell]$, so that it is possible to perform the perfect digital SI cancellation by exploiting the following commutative property of the modulo operator:

$$\mathrm{mod}_\lambda(\mathrm{mod}_\lambda(a) - b) = \mathrm{mod}_\lambda(a - b),$$

and, finally, the SoI is reconstructed as

$$\hat{x}_d[\ell] = \mathrm{mod}_\lambda(r_d[\ell] - gz_d[\ell]).$$

By using the above-presented expression for $r_d[\ell]$ together with the commutative property of the modulo operator, one can write $\hat{x}_d[\ell]$ as follows:

$$\hat{x}_d[\ell] = \mathrm{mod}_\lambda(gx_d[\ell] + n_Q[\ell]),$$

where $x_d[\ell] = x_a(\ell T_s)$. Hence, whenever $|gx_d[\ell] + n_Q[\ell]| \leq \lambda/2$, it holds that $\mathrm{mod}_\lambda(gx_d[\ell] + n_Q[\ell]) = gx_d[\ell] + n_Q[\ell]$, and $\hat{x}_d[\ell]$ provides a successful digital reconstruction of the SoI and with the SQNR given by

$$\mathrm{SQNR} = g^2 P_{SoI}/P_Q \approx 12g^2 P_{SoI}/\mu^2 = 12g^2 P_{SoI} 2^{2b}/\lambda^2,$$

which is independent of the power $P_{SI}$ of SI. In consequence, it is possible to set the variable gain parameter $g$ only as a function of $P_{SoI}$ and maximize the SQNR as long as it is guaranteed that

$$\mathrm{Pr}\left(|gx_d[\ell] + n_Q[\ell]| \leq \lambda/2\right) \approx 1.$$

In practice, this results in negligible SQNR degradation with respect to the case in which the SoI $gx_d(t)$ could be directly quantized.

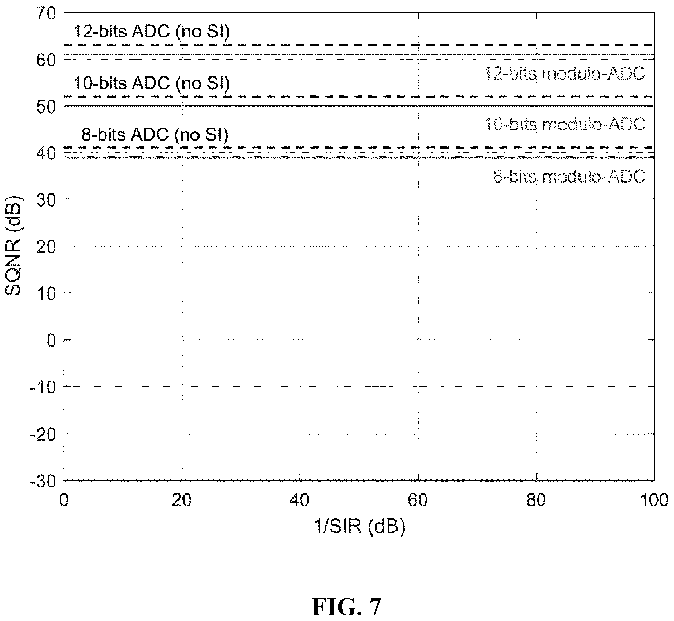

FIG. 7 shows the SQNR as function of $1/\mathrm{SIR} = P_{SI}/P_{SoI}$, as obtained when assuming that the SI is perfectly estimated in the FD transceiver 500. The dashed lines in FIG. 7 show the benchmark performance without the SI for different bits of quantization. The solid lines in FIG. 7 show the performance with the SI for the same bits of quantization. The 2 dB loss with respect to the benchmark SQNR is independent from the SI power and comes from the necessity of guaranteeing the condition $\mathrm{Pr}(|gx_d[\ell] + n_Q[\ell]| \leq \lambda/2) \approx 1$. One can see that the FD transceiver 500 outperforms the state-of-the-art FD transceivers in the high $1/\mathrm{SIR}$ region (see FIG. 4) without requiring any analog SI cancellation and isolation technique.

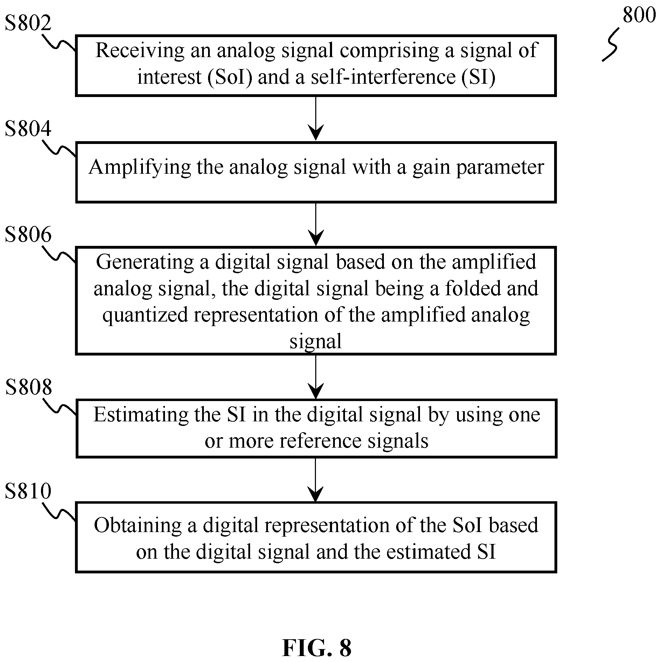

FIG. 8 shows a flowchart of a method 800 for operating the FD transceiver 500 in accordance with one exemplary embodiment. In general, the method 800 describes the operation of the FD transceiver 500 in terms of the SI estimation and cancellation. The method 800 starts with a step S802, in which the analog front-end 506 receives an analog signal comprising a SoI and a SI. The analog front-end 506 may receive the analog signal directly (if the analog signal is transmitted via wire-based communications) or with the aid of the receiving antenna 504 (if the analog signal is transmitted via wireless communications). The analog front-end 506 is intended to perform the whole required analog processing of the analog signal, such, for example, as filtering, power amplification, low noise amplification, up- and down-conversion to and from a carrier signal, etc. Then, the method 800 proceeds to a step S804, in which the variable gain amplifier 514 amplifies the analog signal with a gain parameter, thereby outputting the amplified analog signal in the form of $r_a(t)$. The gain parameter is tuned by the gain control unit 516. After that, the method 800 goes on to a step S806, in which the modulo-based ADC 512 generates, based on the amplified analog signal $r_a(t)$, a digital signal in the form of $r_d[\ell]$. The digital signal is obtained by performing a modulo-based analog-to-digital conversion operation on the amplified analog signal, for which reason the digital signal is represented by a folded and quantized representation of the amplified analog signal. In other words, the fact that the digital signal is generated as $r_d[\ell]$ means that the amplified analog signal is subjected to the modulo-based analog-to-digital conversion operation in the FD transceiver 500. The method 800 further proceeds to a step S808, in which the digital canceller 520 receives the digital signal $r_d[\ell]$ and estimates the SI therein by using one or more reference signals, as will be described further in more detail. Further, a step S810 is initiated, in which the digital canceller 520 obtains a digital representation of the SoI, i.e. $\hat{x}_d[\ell]$, based on the digital signal and the estimated SI. The digital representation $\hat{x}_d[\ell]$ that is free of the SI may be then fed to the TX and RX DSP subunit 518 for further digital processing, if required.

In one exemplary embodiment, the modulo-based ADC 512 is configured to generate the digital signal $r_d[\ell]$ in the step S806 of the method 800 by transforming the amplified analog signal $r_a(t)$ into a phase-domain signal which is folded every $2\pi$ radians (e.g., a phase-domain signal sin $(r_a(t))$), and by quantizing the phase-domain signal. It should be noted that the quantized phase-domain signal may be further subjected to particular post-quantization processing, for example, to improve its linearity, if required.

In another exemplary embodiment, the modulo-based ADC 512 is configured to apply an incremental fold counter to the amplified analog signal $r_a(t)$ when generating the digital signal $r_d[\ell]$ in the step S806 of the method 800. In this exemplary embodiment, the modulo operation is implemented as the incremental fold counter that will take as input the analog signal $r_a(t)$ and output the signal $\tilde{r}_a(t) = r_a(t) + k(t) * \lambda$, where $k(t)$ is the integer that represents the number of folds of the original analog signal. After a sample period $T_s$, the modulo-based ADC 512 will check whether

$$|r_a(t + T_s) + k(t) * \lambda| > \frac{\lambda}{2}.$$

If this condition is verified, then it sets $k(t + T_s) = k(t) \pm 1$ depending on the sign of $r_a(t + T_s)$. This operation corresponds to incrementing or decrementing the fold counter. The practical limitation of this fold counter is that it requires that $|r_a(t + T_s) - r_a(t)|$ is bounded by $\lambda$ since it is required to track at most 1 fold in the duration $T_s$. This may require a reduction in the sample period $T_s$.

In yet another exemplary embodiment, the modulo-based ADC 512 is configured as one or more voltage-controlled oscillator-based ADCs, such, for example, as ring oscillator-based ADCs, in order to generate the digital signal $r_d[\ell]$ in the step S806 of the method 800. A ring oscillator is a circular chain of inverter circuits, in which an output of each inverter in the chain is connected to an input of a next inverter in the chain. The inversion for all inverters is then controlled by the same input signal $r_a(t)$. When the inverters are wired in this way, the frequency of oscillation in the ring oscillator will be a function of the input signal $r_a(t)$ and it will generate a frequency modulated signal. Such a circuit has been long used for generating such frequency modulated signals, for example, for frequency modulated radio diffusion, but it can be repurposed as a modulo operator for the modulo-based ADC 512.

As noted above, the digital canceller 520 performs the following two functions: it estimates the SI from the digital signal $r_d[\ell]$ and removes the estimated SI from the digital signal $r_d[\ell]$, using one or more reference signal(s) with the final objective of providing the digital representation $\hat{x}_d[\ell]$ of the SoI in the step S810 of the method 800. Doing so, the digital canceller 520 exploits the commutative property of the modulo operator to account for the effect of the modulo-based analog-to-digital conversion on the received analog signal. In the embodiments disclosed herein, the digital canceller 520 is an evolution of the state-of-the-art techniques adapted with necessary algorithmic steps to handle the modulo operation included in the modulo-based analog-to-digital conversion.

The reference signals may comprise reference symbols representative of analog and/or digital signals that have been sent from the analog front-end 506. In one exemplary embodiment, the FD transceiver 500 may further comprise a memory configured to store the reference signals or symbols. This memory may be implemented as a FIFO circular buffer of length N. Let us denote each of these reference symbol as $u[\ell - n]$, where $\ell$ is the index of the received reference symbol, and n is the offset of the reference symbol in the past. A vector of reference symbols is then

$$\boldsymbol{u}[\ell] = (u[\ell], u[\ell - 1], \dots, u[\ell - N + 1])^T.$$

To keep the vector of length $N$, one should pop the oldest reference value from $\boldsymbol{u}[\ell]$ from the back of the vector and insert the newest reference value from the front. A digital SI cancellation algorithm is used to find a function of $\boldsymbol{u}[\ell]$ that best estimates the SI $z_d[\ell]$. This is typically done through an adaptive filter. The cancellation is done through a set of weights denoted by $\boldsymbol{w}[\ell]$, so that the SI $z_d[\ell]$ is estimated by $\hat{z}_d[\ell]$ as

$$g\hat{z}_d[\ell] = \boldsymbol{w}^H[\ell]\boldsymbol{u}[\ell].$$

There is a multitude of ways to iteratively update the weights $\boldsymbol{w}[\ell]$ to improve the performance of the digital SI cancellation algorithm.

In one exemplary embodiment, the adaptive filter used by the digital canceller 520 may be based on a normalized least-mean-square (NLMS) algorithm. An estimation error may be successively computed as

$$e[\ell] = \mathrm{mod}_\lambda(r_d[\ell] - g\hat{z}_d[\ell]),$$

and the adaptive filter may be iteratively updated as

$$\boldsymbol{w}[\ell + 1] = \boldsymbol{w}[\ell] + \mu e[\ell]\frac{\boldsymbol{u}[\ell]}{||\boldsymbol{u}[\ell]||^2}$$

when the adaptive filter is applied to real signals as is the case, for example, when processing separately in-phase and quadrature components of a signal. The choice of the gain parameter $g$ is important for the convergence and behavior of the NLMS algorithm. The gain control unit 516 used for this purpose will be described further in detail.

It should be noted that the present disclosure is not limited to the NLMS algorithm - in some exemplary embodiment, the adaptive filter may be based on one of an LMS algorithm, a leaky LMS algorithm, a recursive least squares algorithm, etc. Moreover, the algorithm which the adaptive filter is based on may be adapted to any number of digital and/or analog reference signals. On top of that, in another exemplary embodiment, the digital canceller 520 is configured to apply, instead of the adaptive filter, a machine-learning algorithm (e.g., neural networks) to estimate the SI in the digital signal $r_d[\ell]$ by using the reference signals.

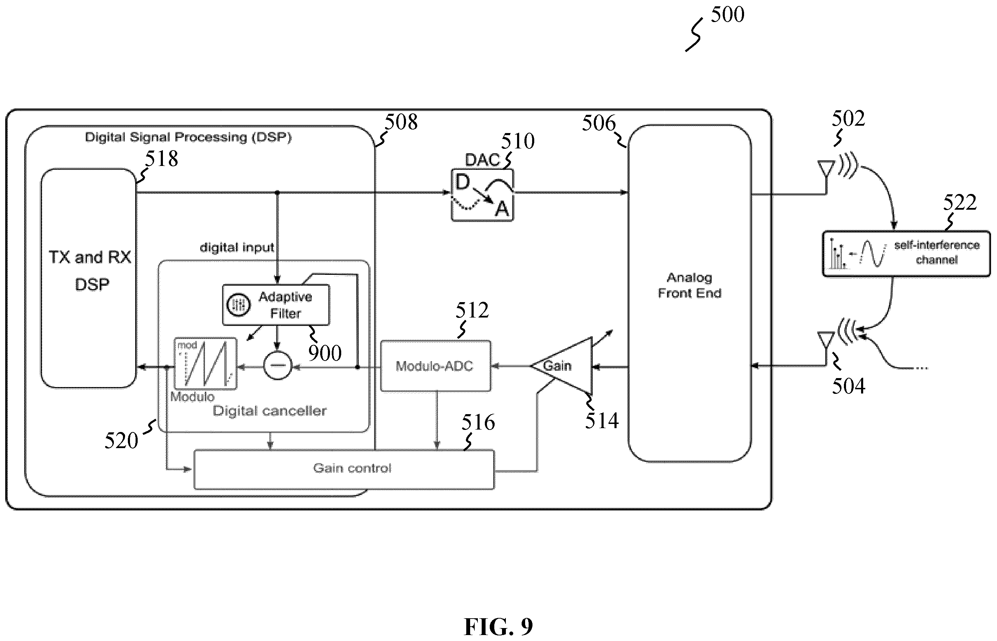

FIG. 9 shows how the digital canceller 520 may be implemented in the FD transceiver 500 in accordance with one exemplary embodiment. As shown in FIG. 9, the digital canceller 520 uses an adaptive filter 900 that receives a digital reference signal through digital means of the FD transceiver 500, i.e. from the TX and RX DSP subunit 518. Further digital SI cancellation may be performed as discussed above.

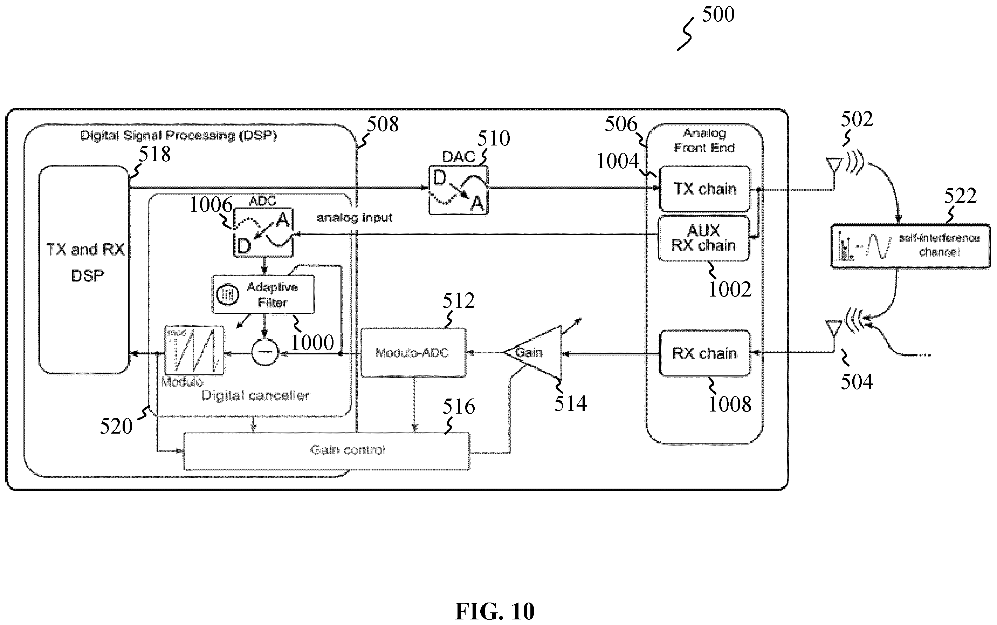

FIG. 10 shows how the digital canceller 520 may be implemented in the FD transceiver 500 in accordance with another exemplary embodiment. As shown in FIG. 10, the digital canceller 520 uses an adaptive filter 1000 that receives an analog reference signal through an auxiliary RX chain 1002 of the analog front-end 506, which in turn is coupled to a TX chain 1004 of the analog front-end 506. The digital canceller 520 further uses an ADC 1006 to perform an analog-to-digital conversion operation on the analog reference signal. Further digital SI cancellation for the analog signal received through a RX chain 1008 of the analog front-end 506 may be performed as discussed above.

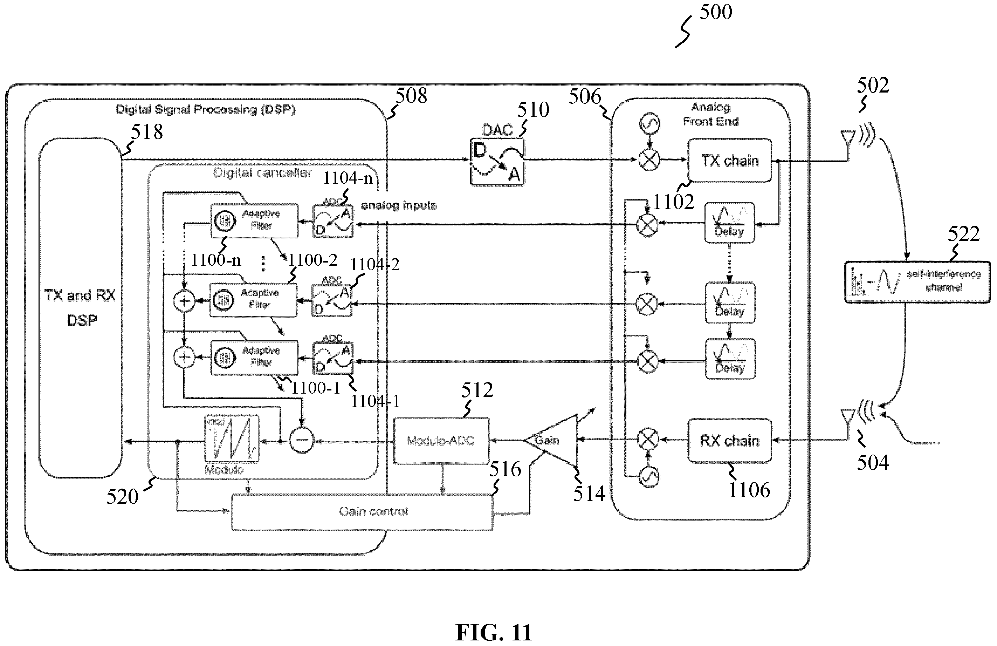

FIG. 11 shows how the digital canceller 520 may be implemented in the FD transceiver 500 in accordance with another exemplary embodiment. As shown in FIG. 11, the digital canceller 520 uses a set of adaptive filters 1100-1, 1100-2, ... 1100-n that receive multiple delayed analog reference signals from a TX chain 1102 of the analog front-end 506. The digital canceller 520 further uses a set of ADCs 1104-1, 1104-2, ... 1104-n for the adaptive filters 1100-1, 1100-2, ... 1100-n, respectively, to perform the analog-to-digital conversion operation on the delayed analog reference signals. Further digital SI cancellation for the analog signal received through a RX chain 1106 of the analog front-end 506 may be performed as discussed above.

Turning back to FIG. 5, the gain control unit 516 is configured to tune the gain parameter $g$ of the variable gain amplifier 514 based on at least one of the estimated SI (i.e. $z_d[\ell]$), the digital representation of the SoI (i.e. $\hat{x}_d[\ell]$), and the reference signals used by the digital canceller 520. By so doing, it is possible to provide dynamic adaptation of the gain parameter $g$ of the variable gain amplifier 514, thereby resulting in the proper amplification of received analog signals. In the meantime, the gain parameter $g$ is to be set such that the effect of the quantization noise $n_Q[\ell]$ on the SoI is reduced, while guaranteeing that the digital canceller 520 performs as expected.

For this purpose, it is required to set the gain parameter $g$ to its highest possible value in order to maximize the SQNR. Simultaneously, it is required to guarantee that the digital canceller 520 operates at such $g$. Hence, in a preferred embodiment, the gain parameter $g$ is chosen at time instant $\ell$ based on the above-mentioned feedback information from the digital canceller 520 as the highest $g$ verifying

$$\mathrm{Pr}\big(\big|e[\ell] - gx_d[\ell] - n_Q[\ell]\big| > \epsilon\big) = \mathrm{Pr}\big(\big|\mathrm{mod}_\lambda(r_d[\ell] - g\hat{z}_d[\ell]) - gx_d[\ell] - n_Q[\ell]\big| > \epsilon\big) \approx 0$$

for some small $\varepsilon > 0$. In formal terms, this means that one should choose $g$ so that the error left after estimating the SI $g\hat{z}_d[\ell]$ is close to the SoI plus the quantization noise term $n_Q[\ell]$ with high probability.

In another embodiment, the gain parameter $g$ may be fixed and set so that the average received signal power verifies

$$\Pr\left(\left|g\sqrt{B}x_d[\ell]\right| < \lambda/2\right) \approx 1,$$

where $B > 1$ is a backoff value used to allow some margin for proper operation of the FD transceiver 500.

While working, the above solution with fixed gain parameter $g$ suffers from the fact that the digital SI cancellation algorithm breaks down for higher values of 1/SIR, i.e. $P_{SI}/P_{Sol}$. Thus, the gain parameter $g_{initial}$ has to be set so that

$$\Pr\left(\left|g_{initial}x_d[\ell] + g_{initial}z_d[\ell] + n_Q[\ell]\right| < \lambda/2\right) \approx 1,$$

and the digital SI cancellation algorithm may perfectly recover the weights needed to remove the SI. Once this step is over, one can set the gain parameter $g_{final}$ as

$$\Pr\left(\left|g_{final}\sqrt{B_{final}}x_d[\ell] + n_Q[\ell]\right| < \lambda/2\right) \approx 1$$

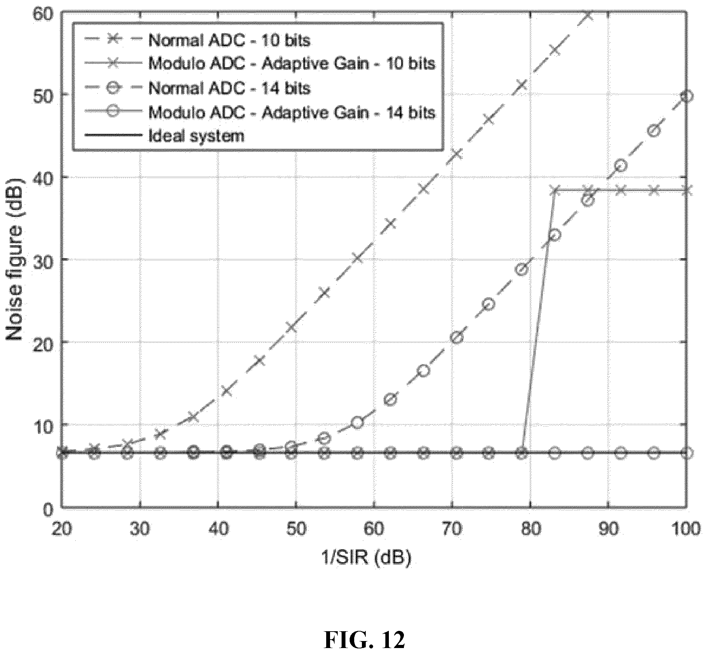

with the final backoff $B_{final} > 1$ set to a low value, for example, 3 dB. In this case, the gain control unit 516 switch between $g[\ell]$ = $g_{initial}$ when $\ell \leq L$ and $g[\ell] = g_{final}$ if $\ell > L$. By so doing, it is possible to improve the results from the approach with the fixed gain parameter, as shown in FIG. 12 (where $L$ = 16384 samples). The implementation of the FD transceiver using the modulo-based ADC 512 manages to achieve perfect recovery with a resolution of 14 bits up to a ratio $P_{SI}/P_{Sol}$ of 100 dB, and 80 dB for a resolution of 10 bits.

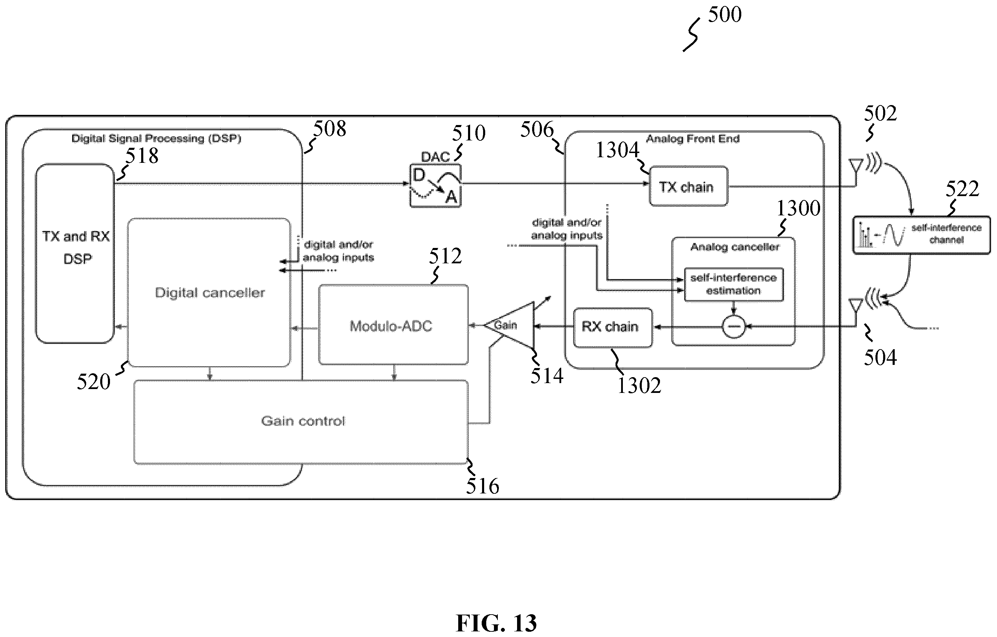

Although the FD transceiver 500 provides the efficient digital SI cancellation without having to use any analog SI cancellation and isolation technique, it still could be combined with these techniques, if required. One example of such combination is shown in FIG. 13 where the FD transceiver 500 uses an analog canceller 1300 in concert with the digital canceller 520. The analog canceller 1300 is arranged between a RX chain 1302 of the analog front-end 506 and the receiving antenna 504, and may receive digital and/or analog reference signals, for example, from a TX chain 1304 of the analog front-end 506 to perform the analog SI cancellation. The residual SI is then cancelled in the digital canceller 520 in accordance with the method 700.

It should be noted that each step or operation of the method 800, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the executable instructions which embody the steps or operations described above can be stored on a corresponding data carrier and executed by at least one process included in the FD transceiver 500. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. A full-duplex (FD) transceiver (500) comprising:

an analog front-end (506) configured to receive an analog signal, the analog signal comprising a signal of interest (Sol) and a self-interference (SI);
a variable gain amplifier (514) configured to amplify the analog signal based on a gain parameter;
a modulo-based analog-to-digital converter (ADC) (512) configured to generate a digital signal based on the amplified analog signal, the digital signal being a folded and quantized representation of the amplified analog signal, wherein the modulo-based ADC (512) is configured to apply a modulo operation, before quantization, to fold the amplified analog signal such that the analog signal matches an input range of a quantizer used in the modulo-based ADC (512); and
a digital canceller (520) configured to:

> estimate the SI in the digital signal based on one or more reference signals; and
> obtain a digital representation of the SoI based on the digital signal and the estimated SI.

2. The FD transceiver (500) of claim 1, wherein the modulo-based ADC (512), is configured to generate the digital signal by applying an incremental fold counter to the amplified analog signal or comprises one or more voltage-controlled oscillator-based ADCs.

3. The FD transceiver (500) of any one of claims 1 to 2, wherein the one or more reference signals comprise one or more analog and/or digital signals sent from the analog front-end (506).

4. The FD transceiver (500) of any one of claims 1 to 3, further comprising a memory configured to store the one or more reference signals, optionally wherein the memory is configured as a first-in first-out buffer.

5. The FD transceiver (500) of any one of claims 1 to 4, wherein the digital canceller (520) is configured to apply an adaptive filter to estimate the SI in the digital signal based on the one or more reference signals.

6. The FD transceiver (500) of claim 5, wherein the adaptive filter is based on one of a least-mean-square (LMS) algorithm, a normalized LMS algorithm, a leaky LMS algorithm, and a recursive least square algorithm.

7. The FD transceiver (500) of any one of claims 1 to 4, wherein the digital canceller (520) is configured to apply a machine-learning algorithm to estimate the SI in the digital signal based on the one or more reference signals.

8. A method for operating a full-duplex (FD) transceiver (500), comprising:

> receiving (S802) an analog signal, the analog signal comprising a signal of interest (SoI) and a self-interference (SI);
> amplifying (S804) the analog signal based on a gain parameter;
> generating (S806), by a modulo-based analog-to-digital converter (ADC) (512), a digital signal based on the amplified analog signal, the digital signal being a folded and quantized representation of the amplified analog signal, wherein the analog signal is folded by applying a modulo operation before quantization, such that the analog signal matches an input range of a quantizer used in the modulo-based ADC (512);
> estimating (S808) the SI in the digital signal based on one or more reference signals; and
> obtaining (S810) a digital representation of the SoI based on the digital signal and the estimated SI.

9. The method of claim 8, wherein the generating (S806) the digital signal comprises:

> transforming the amplified analog signal into a phase-domain signal, the phase-domain signal being folded every $2\pi$ radians; and
> generating the digital signal by quantizing the phase-domain signal.

10. The method of claim 8, wherein the generating (S806) the digital signal comprises generating the digital signal, by applying an incremental fold counter to the amplified analog signal, or, by using one or more voltage-controlled oscillators.

11. The method of any one of claims 8 to 10, wherein the one or more reference signals comprise one or more analog and/or digital signals sent from the FD transceiver.

12. The method of any one of claims 8 to 11, wherein the estimating (S808) the SI in the digital signal is performed by using an adaptive filter; optionally wherein the adaptive filter is based on one of a least-mean-square (LMS) algorithm, a normalized LMS algorithm, a leaky LMS algorithm, and a recursive least squares algorithm.

13. The method of any one of claims 8 to 11, wherein the estimating (S808) the SI in the digital signal is performed by using a machine-learning algorithm.

14. The method of any one of claims 8 to 13, further comprising tuning the gain parameter based on at least one of the estimated SI, the digital representation of the SoI, and the one or more reference signals.

15. A computer program product comprising a computer-readable storage medium, wherein the computer-readable storage medium stores a computer code which, when executed by a processor of a full-duplex transceiver (500), causes the full-duplex transceiver (500) to perform the method according to any one of claims 8 to 14.

**Patentansprüche**

1. Vollduplex-(FD)-Sende-Empfänger (500), umfassend:

ein analoges Front-End (506), das dazu konfiguriert ist, ein analoges Signal zu empfangen, wobei das analoge Signal ein Signal von Interesse (SoI) und eine Selbstinterferenz (SI) umfasst;
einen Verstärker (514) mit variabler Verstärkung, der dazu konfiguriert ist, das analoge Signal basierend auf einem Verstärkungsparameter zu verstärken;
einen modulobasierten Analog-Digital-Wandler (ADC) (512), der dazu konfiguriert ist, ein digitales Signal basierend auf dem verstärkten analogen Signal zu erzeugen, wobei das digitale Signal eine gefaltete und quantisierte Darstellung des verstärkten analogen Signals ist, wobei der modulobasierte ADC (512) dazu konfiguriert ist, vor der Quantisierung eine Modulo-Operation anzuwenden, um das verstärkte analoge Signal so zu falten, dass das analoge Signal mit einem Eingangsbereich eines Quantisierers übereinstimmt, der in dem modulobasierten ADC (512) verwendet wird; und
einen digitalen Unterdrücker (520), der zu Folgendem konfiguriert ist:

Schätzen der SI in dem digitalen Signal basierend auf einem oder mehreren Referenzsignalen; und
Erlangen einer digitalen Darstellung des SoI basierend auf dem digitalen Signal und der geschätzten SI.

2. FD-Sende-Empfänger (500) nach Anspruch 1, wobei der modulobasierte ADC (512) dazu konfiguriert ist, das digitale Signal durch Anwenden eines inkrementellen Faltungszählers auf das verstärkte analoge Signal zu erzeugen, oder einen oder mehrere spannungsgesteuerte, oszillatorbasierte ADCs umfasst.

3. FD-Sende-Empfänger (500) nach einem der Ansprüche 1 bis 2, wobei das eine oder die mehreren Referenzsignale ein oder mehrere analoge und/oder digitale Signale umfassen, die durch das analoge Front-End (506) gesendet werden.

4. FD-Sende-Empfänger (500) nach einem der Ansprüche 1 bis 3, ferner umfassend einen Speicher, der dazu konfiguriert ist, das eine oder die mehreren Referenzsignale zu speichern, wobei der Speicher optional als ein First-In-First-Out-Puffer konfiguriert ist.

5. FD-Sende-Empfänger (500) nach einem der Ansprüche 1 bis 4, wobei der digitale Unterdrücker (520) dazu konfiguriert ist, einen adaptiven Filter anzuwenden, um die SI in dem digitalen Signal basierend auf dem einem oder den mehreren Referenzsignalen zu schätzen.

6. FD-Sende-Empfänger (500) nach Anspruch 5, wobei der adaptive Filter auf einem von einem Algorithmus für kleinste mittlere Quadrate (LMS), einem Algorithmus für normalisierte LMS, einem Algorithmus für undichte LMS oder einem Algorithmus für rekursive kleinste Quadrate basiert.

7. FD-Sende-Empfänger (500) nach einem der Ansprüche 1 bis 4, wobei der digitale Unterdrücker (520) dazu konfiguriert ist, einen Algorithmus für maschinelles Lernen anzuwenden, um die SI in dem digitalen Signal basierend auf dem einen oder den mehreren Referenzsignalen zu schätzen.

8. Verfahren zum Betreiben eines Vollduplex-(FD)-Sende-Empfängers (500), umfassend:

Empfangen (S802) eines analogen Signals, wobei das analoge Signal ein Signal von Interesse (SoI) und eine Selbstinterferenz (SI) umfasst;
Verstärken (S804) des analogen Signals basierend auf einem Verstärkungsparameter;
Erzeugen (S806), durch einen modulobasierten Analog-Digital-Wandler (ADC) (512), eines digitalen Signals basierend auf dem verstärkten analogen Signal, wobei das digitale Signal eine gefaltete und quantisierte Darstellung des verstärkten analogen Signals ist, wobei das analoge Signal durch Anwenden einer Modulo-Operation vor einer Quantisierung so gefaltet wird, dass das analoge Signal mit einem Eingangsbereich eines Quantisierers übereinstimmt, der in dem modulobasierten ADC (512) verwendet wird;

Schätzen (S808) der SI in dem digitalen Signal basierend auf einem oder mehreren Referenzsignalen; und

Erlangen (S810) einer digitalen Darstellung des SoI basierend auf dem digitalen Signal und der geschätzten SI.

9. Verfahren nach Anspruch 8, wobei das Erzeugen (S806) des digitalen Signals Folgendes umfasst:

Umwandeln des verstärkten analogen Signals in ein Phasenbereichssignal, wobei das Phasenbereichssignal alle $2\pi$ Radianten gefaltet wird; und

Erzeugen des digitalen Signals durch Quantisieren des Phasenbereichssignals.

10. Verfahren nach Anspruch 8, wobei das Erzeugen (S806) des digitalen Signals Erzeugen des digitalen Signals durch Anwenden eines inkrementellen Faltungszählers auf das verstärkte analoge Signal oder durch Verwenden eines oder mehrerer spannungsgesteuerter Oszillatoren umfasst.

11. Verfahren nach einem der Ansprüche 8 bis 10, wobei das eine oder die mehreren Referenzsignale ein oder mehrere analoge und/oder digitale Signale umfassen, die durch den FD-Sende-Empfänger gesendet werden.

12. Verfahren nach einem der Ansprüche 8 bis 11, wobei das Schätzen (S808) der SI in dem digitalen Signal unter Verwendung eines adaptiven Filters durchgeführt wird; wobei der adaptive Filter optional auf einem von einem Algorithmus für kleinste mittlere Quadrate (LMS), einem Algorithmus für normalisierte LMS, einem Algorithmus für undichte LMS oder einem Algorithmus für rekursive kleinste Quadrate basiert.

13. Verfahren nach einem der Ansprüche 8 bis 11, wobei das Schätzen (S808) des SI in dem digitalen Signal unter Verwendung eines Algorithmus für maschinelles Lernen durchgeführt wird.

14. Verfahren nach einem der Ansprüche 8 bis 13, ferner umfassend Abstimmen des Verstärkungsparameters basierend auf mindestens einem von der geschätzten SI, der digitalen Darstellung des SoI und dem einen oder den mehreren Referenzsignalen.

15. Computerprogrammprodukt, umfassend ein computerlesbares Speichermedium, wobei das computerlesbare Speichermedium einen Computercode speichert, der, wenn er durch einen Prozessor eines Vollduplex-Sende-Empfängers (500) ausgeführt wird, den Vollduplex-Sende-Empfänger (500) dazu veranlasst, das Verfahren nach einem der Ansprüche 8 bis 14 durchzuführen.

**Revendications**

1. Émetteur-récepteur en duplex intégral (FD) (500), comprenant :

un frontal analogique (506) configuré pour recevoir un signal analogique, le signal analogique comprenant un signal d'intérêt (SoI) et une auto-interférence (SI) ;

un amplificateur à gain variable (514) configuré pour amplifier le signal analogique sur la base d'un paramètre de gain ;

un convertisseur analogique-numérique (CAN) basé sur le modulo (512) configuré pour générer un signal numérique basé sur le signal analogique amplifié, le signal numérique étant une représentation pliée et quantifiée du signal analogique amplifié, dans lequel le CAN basé sur le modulo (512) est configuré pour appliquer une opération modulo, avant la quantification, pour plier le signal analogique amplifié de telle sorte que le signal analogique corresponde à une plage d'entrée d'un quantificateur utilisé dans le CAN basé sur le modulo (512) ; et

un annuleur numérique (520) configuré pour :

estimer la SI dans le signal numérique sur la base d'un ou de plusieurs signaux de référence ; et

obtenir une représentation numérique du SoI basée sur le signal numérique et la SI estimée.

2. Émetteur-récepteur FD (500) selon la revendication 1, dans lequel le CAN basé sur le modulo (512) est configuré pour générer le signal numérique en appliquant un compteur de repli incrémentiel au signal analogique amplifié ou comprend un ou plusieurs CAN basés sur un oscillateur contrôlé en tension.

3. Émetteur-récepteur FD (500) selon l'une quelconque des revendications 1 et 2, dans lequel les un ou plusieurs signaux de référence comprennent un ou plusieurs signaux analogiques et/ou numériques envoyés depuis le frontal analogique (506).

4. Émetteur-récepteur FD (500) selon l'une quelconque des revendications 1 à 3, comprenant également une mémoire configurée pour stocker les un ou plusieurs signaux de référence, dans lequel la mémoire est éventuellement configurée comme un tampon premier entré, premier sorti.

5. Émetteur-récepteur FD (500) selon l'une quelconque des revendications 1 à 4, dans lequel l'annuleur numérique (520) est configuré pour appliquer un filtre adaptatif pour estimer la SI dans le signal numérique sur la base des un ou plusieurs signaux de référence.

6. Émetteur-récepteur FD (500) selon la revendication 5, dans lequel le filtre adaptatif est basé sur l'un d'un algorithme des moindres carrés moyens (LMS), d'un algorithme LMS normalisé, d'un algorithme LMS à fuite et d'un algorithme des moindres carrés récursifs.

7. Émetteur-récepteur FD (500) selon l'une quelconque des revendications 1 à 4, dans lequel l'annuleur numérique (520) est configuré pour appliquer un algorithme d'apprentissage automatique pour estimer la SI dans le signal numérique sur la base des un ou plusieurs signaux de référence.

8. Procédé de fonctionnement d'un émetteur-récepteur (500) en duplex intégral (FD), comprenant :

la réception (S802) d'un signal analogique, le signal analogique comprenant un signal d'intérêt (SoI) et une auto-interférence (SI) ;
l'amplification (S804) du signal analogique sur la base d'un paramètre de gain ;
la génération (S806), par un convertisseur analogique-numérique (CAN) basé sur le modulo (512), d'un signal numérique basé sur le signal analogique amplifié, le signal numérique étant une représentation pliée et quantifiée du signal analogique amplifié, dans lequel le signal analogique est plié par application d'une opération modulo avant la quantification, de telle sorte que le signal analogique corresponde à une plage d'entrée d'un quantificateur utilisé dans le CAN basé sur le modulo (512) ;
l'estimation (S808) de la SI dans le signal numérique sur la base d'un ou de plusieurs signaux de référence ; et
l'obtention (S810) d'une représentation numérique du SoI basée sur le signal numérique et la SI estimée.

9. Procédé selon la revendication 8, dans lequel la génération (S806) du signal numérique comprend :

la transformation du signal analogique amplifié en un signal de domaine de phase, le signal de domaine de phase étant plié tous les $2\pi$ radians ; et
la génération du signal numérique en quantifiant le signal de domaine de phase.

10. Procédé selon la revendication 8, dans lequel la génération (S806) du signal numérique comprend la génération du signal numérique, en appliquant un compteur de repli incrémentiel au signal analogique amplifié, ou en utilisant un ou plusieurs oscillateurs contrôlés en tension.

11. Procédé selon l'une quelconque des revendications 8 à 10, dans lequel les un ou plusieurs signaux de référence comprennent un ou plusieurs signaux analogiques et/ou numériques envoyés à partir de l'émetteur-récepteur FD.

12. Procédé selon l'une quelconque des revendications 8 à 11, dans lequel l'estimation (S808) de la SI dans le signal numérique est effectuée en utilisant un filtre adaptatif ; éventuellement dans lequel le filtre adaptatif est basé sur l'un d'un algorithme des moindres carrés moyens (LMS), d'un algorithme LMS normalisé, d'un algorithme LMS à fuite et d'un algorithme des moindres carrés récursifs.

13. Procédé selon l'une quelconque des revendications 8 à 11, dans lequel l'estimation (S808) de la SI dans le signal numérique est effectuée en utilisant un algorithme d'apprentissage automatique.

14. Procédé selon l'une quelconque des revendications 8 à 13, comprenant également le réglage du paramètre de gain sur la base d'au moins l'un de la SI estimée, de la représentation numérique du SoI et des un ou plusieurs signaux de référence.

**15.** Produit de programme informatique comprenant un support de stockage lisible par ordinateur, dans lequel le support de stockage lisible par ordinateur stocke un code informatique qui, lorsqu'il est exécuté par un processeur d'un émetteur-récepteur en duplex intégral (500), amène l'émetteur-récepteur en duplex intégral (500) à exécuter le procédé selon l'une quelconque des revendications 8 à 14.

**FIG. 1**

FIG. 2

Sol, SI and their sum at the ADC input

SI
$gz_a(t)$

SI+Sol
$r_a(t)$

Sol
$gx_a(t)$

ADC Output

$r_d[\ell]$

After perfect digital SI cancellation

Sol estimate
$\hat{x}_d[\ell]$

**FIG. 3**

**FIG. 4**

FIG. 5

**FIG. 6**

FIG. 7

S802

Receiving an analog signal comprising a signal of interest (SoI) and a self-interference (SI)

800

S804

Amplifying the analog signal with a gain parameter

S806

Generating a digital signal based on the amplified analog signal, the digital signal being a folded and quantized representation of the amplified analog signal

S808

Estimating the SI in the digital signal by using one or more reference signals

S810

Obtaining a digital representation of the SoI based on the digital signal and the estimated SI

**FIG. 8**

FIG. 9

FIG. 10

**FIG. 11**

FIG. 12

**FIG. 13**

EP 4 208 949 B1

**EP 4 208 949 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014198688 A1
- US 2020295912 A1
- WO 2018153439 A1